# FASCICULE DE BREVET EUROPEEN

(11) **EP 2 459 404 B1**
(45) Date de publication et mention de la délivrance du brevet: **21.08.2013**
(21) Numéro de dépôt: 10752865.5
(22) Date de dépôt: 26.07.2010
(51) Int. Cl.: B60J 10/00, B60J 10/02, B29C 45/14

(54) **VITRAGE A JOINT COMPORTANT UN INSERT EN FORME DE PEIGNE ET PROCEDE DE FABRICATION DUDIT VITRAGE**
GELENKGLASTAFEL MIT KAMMFÖRMIGEM EINSATZ SOWIE VERFAHREN ZUR HERSTELLUNG DIESER GLASTAFEL
JOINTED GLASS PANEL COMPRISING COMB-SHAPED INSERT, AND METHOD FOR MANUFACTURING SAID GLASS PANEL

(30) Priorité: 28.07.2009 FR 0955279
(43) Date de publication de la demande: 06.06.2012
(73) Titulaire: Saint-Gobain Glass France, 92400 Courbevoie (FR)
(72) Inventeur: KLEO, Christophe, F-60350 Attichy (FR); MOTTELET, Béatrice, F-60200 Compiegne (FR)
(74) Mandataire: Jamet, Vincent
(86) Numéro de dépôt international: PCT/FR2010/051575
(87) Numéro de publication internationale: WO 2011/015764

(56) Documents cités:
- WO-A1-03/070500
- FR-A1- 2 894 865

## Description

L'invention concerne un vitrage muni d'un joint comportant un insert.

L'invention concerne plus particulièrement un vitrage, notamment un vitrage automobile, comportant au moins un élément vitré présentant une zone périphérique munie d'au moins une portion de joint comprenant une matière plastique, ledit vitrage comportant au moins un insert pour le renfort et/ou pour le prépositionnement et/ou pour le positionnement et/ou pour la fixation immobile ou mobile de l'élément vitré par rapport à une baie qu'il doit fermer.

L'invention se rapporte en particulier à un insert présentant une portion intérieure positionnée à l'intérieur dudit joint et dont la surface est ainsi en contact avec le joint et une portion extérieure positionnée à l'extérieur dudit joint et dont la surface n'est ainsi pas en contact avec le joint.

L'homme du métier sait que positionner un insert au moins partiellement dans le joint d'un vitrage peut permettre de réaliser un renfort du vitrage et/ou un prépositionnement du vitrage et/ou un positionnement du vitrage et/ou une fixation immobile ou mobile de l'élément vitré par rapport à une baie qu'il doit fermer.

Toutefois, les inserts de l'art antérieur sont généralement réalisées en matière à base de métal et augmentent d'une manière non négligeable le poids du vitrage.

Il est possible d'utiliser des alliages métalliques spéciaux, plus légers et tout aussi résistants, mais ils sont beaucoup plus chers que les métaux ou alliages métalliques de base et le coût du vitrage augmente alors d'une manière qui ne sera pas acceptée par le client.

Il a déjà été proposé dans la demande internationale de brevet N° WO 03/070500 d'utiliser des matériaux composites qui vont présenter des caractéristiques mécaniques proches de celles des alliages métalliques, pour un coût similaire, tout en étant plus léger.

Toutefois, ce document ne propose pas de forme particulière d'insert. Or, il apparaît qu'utiliser une matière composite à base de matière plastique et réaliser avec cette matière un insert de forme simple, de forme similaire à celle utilisée pour de nombreux inserts métalliques, ne permet pas d'atteindre la tenue mécanique souhaitée pour l'insert.

L'art antérieur connaît aussi la demande de brevet N° FR 2 894 865 qui divulgue un nitrogen selon le préambule de la revendication 1 et un procédé selon le préambule de la revendication 17.

Le but de l'invention est de parvenir à remédier aux inconvénients de l'art antérieur, en proposant une forme spécifique d'insert qui permet de réaliser un insert fin (de faible épaisseur totale et de faible largeur totale) tout en étant particulièrement rigide, pour pouvoir en particulier utiliser une matière composite à base de matière plastique et contenant des charges, notamment des fibres de verre.

L'invention a ainsi pour objet, dans son acception la plus large, un vitrage, notamment un vitrage automobile, selon la revendication 1. Ce vitrage comporte au moins un élément vitré présentant une zone périphérique munie d'au moins une portion de joint comprenant une matière plastique, ledit vitrage comportant en outre au moins un insert, cet insert présentant une portion intérieure positionnée à l'intérieur dudit joint et une portion extérieure positionnée à l'extérieur dudit joint. Ledit insert présente en coupe transversale une forme de peigne comportant au moins trois dents, et de préférence au maximum dix dents, s'étendant perpendiculairement à partir d'une base ou avec un angle a supérieur à 45 ° et inférieur à 90 ° à partir d'une base.

Ladite base est positionnée à l'extérieur dudit joint. Ainsi elle appartient à la portion extérieure de l'insert et non à la portion intérieure.

Ainsi, les extrémités des dents qui sont liées à la base (c'est-à-dire les extrémités de raccordement avec ta base et qui sont ainsi orientées à l'opposé de L'élément vitré) sont situées en dehors du joint car elles appartiennent à la portion extérieure de l'insert.

Ainsi aussi, les extrémités des deux dents latérales (qui sont les deux dents les plus à l'extérieur de la forme de peigne) qui sont proches de l'élément vitré sont situées à l'intérieur du joint car elles appartiennent à la portion intérieure de l'insert.

L'insert selon l'invention présente ainsi une forme allongée, et est positionné sensiblement parallèlement à un bord du vitrage (par exemple le bord avant et/ou le bord arrière d'un vitrage de toit automobile, l'avant et l'arrière étant ici considéré par rapport à la direction d'avancé du véhicule).

Sa forme de peigne, lorsqu'il est vu en coupe transversale, lui confère une rigidité particulière sans toutefois augmenter l'encombrement général de l'insert. Les dents du peigne sont, de préférence, venue de matière avec la base du peigne.

Le peigne présente, de préférence, une symétrie selon un plan longitudinal, afin que ses propriétés de tenue mécanique soient équilibrées de part et d'autre de ce plan longitudinal.

L'insert selon l'invention présente, de préférence au moins une cloison transversale et de préférence encore plusieurs cloisons transversales avec une distance entre deux cloisons successives selon la longueur de l'insert qui est de préférence comprise entre 50 et 80 mm, afin d'améliorer encore la rigidité de l'insert selon sa longueur.

La base du peigne peut être positionnée sensiblement parallèlement à une face de l'élément vitré.

Les dents du peigne peuvent être positionnées, en partie ou toutes, sensiblement perpendiculairement à la base et donc éventuellement sensiblement perpendiculairement à la face de l'élément vitré.

Comme l'élément vitré est, de préférence, non plat mais cintré, ou bombé, la notion de « sensiblement perpendiculaire » est à considérer ici dans une interprétation large (90 ° ± 15 °).

il est toutefois possible qu'une partie seulement des dents, voire uniquement la dent centrale (si les dents sont en nombre impair) ou uniquement les dents centrales (si les dents sont en nombre pair) du peigne soit (ou soient) positionnées sensiblement perpendiculairement à la base.

Ainsi, dans une variante de réalisation au moins une dent centrale, voire plusieurs dents centrales, s'étende(nt) perpendiculairement à partir de la base et présente(nt) en coupe transversale une forme conique plus large en direction de ladite base.

Dans une version particulière, l'épaisseur des dents et l'épaisseur de la base sont comprises entre 1,1 et 4,5 mm, lesdites dents présentant, de préférence, une épaisseur sensiblement identique à l'épaisseur de la base à leur extrémité de raccordement avec ladite base.

De préférence, ladite base est positionnée au delà d'une face externe de la portion du joint dans laquelle la portion intérieure de l'insert est positionnée. La base appartient ainsi à la portion extérieure de l'insert et non à la portion intérieure.

Dans une version particulière, ledit insert est de préférence fermé à au moins une extrémité longitudinale, et de préférence à ses deux extrémités longitudinales, par une paroi de fond venue de matière avec la base ou par un bouchon amovible.

Dans une autre version particulière, en coupe transversale dudit insert au moins deux dents sont reliées entre elles à leurs extrémités opposées à ladite base par une plaque. Cette plaque est, de préférence, venue de matière avec ces deux dents. Cette plaque appartient à la portion intérieure de l'insert après formation du joint.

Dans une autre version particulière, en coupe transversale dudit insert, au moins une dent latérale (plus à l'extérieur), et de préférence les deux dents latérales (les plus à l'extérieur), présente(nt), à leur(s) extrémité(s) opposée(s) à ladite base c'est-à-dire à leur(s) extrémité(s) proche de l'élément vitré, une aile latérale s'étendant sensiblement parallèlement à ladite base, ladite aile latérale présentant de préférence au moins un trou pour le passage de la matière plastique dudit joint et dont le diamètre est de préférence de 3 mm ± 0,5 mm.

Ladite aile latérale, et de préférence chaque aile latérale, s'étend de préférence sensiblement sur toute la longueur dudit insert.

Du fait que les extrémités des deux dents latérales qui sont proches de l'élément vitré sont situées à l'intérieur du joint car elles appartiennent à la portion intérieure de l'insert, chaque aile latérale supportée par une telle extrémité est elle aussi située à l'intérieur du joint et appartient elle aussi à la portion intérieure de l'insert.

La (ou les) aile(s) latérale(s) s'étende(nt) non pas vers l'intérieur de la structure en peigne, mais vers l'extérieur de cette structure ; c'est-à-dire à dire que la (ou les) aile(s) latérale(s) s'étende(nt) latéralement, environ perpendiculairement à l'extrémité de la dent qui la (les) supporte(nt) et ne s'étende(nt) pas en direction d'une dent, mais à l'opposée d'une dent adjacente.

Dans une autre version particulière, en coupe longitudinale dudit insert, au moins une dent, et de préférence toutes les dents, présente(nt chacune), à leur(s) extrémité(s) opposée(s) à ladite base, une aile longitudinale s'étendant sensiblement parallèlement à ladite base, ladite aile longitudinale présentant de préférence au moins un trou pour le passage de la matière plastique dudit joint et dont le diamètre est de préférence de 3 mm ± 0,5 mm.

De préférence, chaque aile longitudinale est située à l'intérieur du joint et appartient elle aussi à la portion intérieure de l'insert.

Ladite aile longitudinale, et de préférence chaque aile longitudinale, s'étend de préférence sensiblement sur toute la largeur dudit insert. La (ou les) aile(s) longitudinale(s) s'étende(nt) non pas vers l'intérieur de la structure en peigne, mais vers l'extérieur de cette structure ; c'est-à-dire que la (ou les) aile(s) longitudinale(s) s'étende(nt) latéralement, environ perpendiculairement à l'extrémité de la dent qui la (les) supporte(nt) et ne s'étende(nt) pas en direction d'une dent, mais à l'opposée.

Il est alors possible que ce soit la (ou les) paroi(s) de fond ou alors que ce soit le (ou les) bouchons(s) amovible(s) qui présente(nt), à leur(s) extrémité(s) opposée(s) à la base, une aile longitudinale s'étendant sensiblement parallèlement à la base, ladite aile longitudinale présentant de préférence au moins un trou pour le passage de la matière plastique dudit joint et dont le diamètre est de préférence de 3 mm ± 0,5 mm.

Dans une autre version particulière, ledit insert présente, en coupe transversale, une hauteur hors-tout comprise entre 12 et 28 mm, la hauteur de la portion intérieure de l'insert étant de préférence inférieure à la hauteur de sa portion extérieure positionnée à l'extérieur dudit joint.

Dans une autre version particulière, ladite base s'étend sur plusieurs bords du vitrage et en particulier sur tous les bords de l'élément vitré. La base peut ainsi présenter vue de dessus une forme de L ou de V lorsqu'elle s'étend sur deux bords de l'élément vitré, une forme de U lorsqu'elle s'étend sur trois bords de l'élément vitré ou encore de triangle, de rectangle, et de toute forme géométrique fermée lorsqu'elle s'étend sur tous les bords du vitrage.

Il est possible que les dents ne soient prévues que sur une ou plusieurs parties de la longueur de la base et ne soient ainsi pas présentent tout le long de la base.

Dans une autre version particulière, ledit insert comporte à une extrémité longitudinale et de préférence à ses deux extrémités longitudinales, au moins une patte transversale positionnée à l'extérieur dudit joint (et ainsi prévue dans la portion extérieure) et comportant des moyens de fixation, comme par exemple un trou taraudé.

Dans une version toute particulière, ledit insert comporte de la matière plastique éventuellement renforcée par des charges, comme par exemple des fibres de verre.

Dans une autre version toute particulière l'insert réalise un support pour un éclairage comportant au moins une source lumineuse comme par exemple une DEL ; cette source lumineuse est, de préférence, disposée entre les dents du peigne ou sur la base du peigne et se trouve ainsi protégée des éléments extérieurs à l'insert. Cette version est particulièrement avantageuse pour la réalisation de toit automobile car elle permet un éclairage de l'habitacle du véhicule par le haut qui est soit indirect par guidage dans l'épaisseur de l'élément vitré et extraction dans une zone spécifique, soit un éclairage direct (cas où la base supporte l'éclairage).

Pour le vitrage selon l'invention le joint recouvre, de préférence, les dents latérales, les plus à l'extérieur de la structure de peigne, sur toute leur longueur et sur une partie de leur hauteur et ne recouvre pas du tout les autres dents ni la base de ta matière plastique constitutive dudit joint (aucun contact entre le joint et la base) et de préférence encore le joint recouvre au moins partiellement au moins une aile latérale (et de préférence les deux ailes latérales), voire au moins une aile longitudinale (et de préférence les deux ailes longitudinale).

Le joint recouvre, de préférence, chaque dent latérale, sur une hauteur comprise entre au moins un dixième et au plus neuf dixième de sa hauteur en partant de l'extrémité de la dent la plus proche de l'élément vitré et de préférence encore, le joint recouvre chaque dent latérale, sur une hauteur comprise entre au moins un cinquième et au plus quatre cinquième de sa hauteur en partant de l'extrémité de la dent la plus proche de l'élément vitré.

L'invention concerne également le procédé de fabrication d'un vitrage selon la revendication 17.

Le surmoulage est, de préférence, opéré sans recouvrir complètement de la matière plastique constitutive dudit joint les dents latérales (plus à l'extérieur) et sans recouvrir du tout les autres dents de la matière plastique constitutive dudit joint et de préférence encore en recouvrant au moins partiellement au moins une aile latérale (et de préférence les deux ailes latérales), voire au moins une aile longitudinale (et de préférence les deux ailes longitudinale).

Dans une variante, l'insert est moulé dans un moule, puis le joint est moulé dans le même moule.

L'invention concerne en outre l'utilisation d'un insert selon l'invention pour le renfort et/ou pour le prépositionnement et/ou pour le positionnement et/ou pour la fixation de l'élément vitré qui est immobile ou mobile par rapport une baie qu'il doit fermer.

Avantageusement, la forme de l'insert selon l'invention permet ainsi de réaliser un insert particulièrement rigide, tant selon sa longueur que selon sa largeur et sa hauteur, et présentant une section transversale (transversalement à sa longueur) de faible largeur, de faible hauteur et employant une quantité de matière relativement faible.

En section transversale, la surface totale entre les dents et qui n'est pas rempli de matière constitutive du joint (c'est-à-dire l'espace vide) est avantageusement sensiblement identique (à ± 10 %) à la surface totale de l'insert.

A rigidité similaire et à matériau d'insert identique, le poids de l'insert selon l'invention est inférieur au poids d'un insert traditionnel sensiblement plat.

Il est ainsi possible grâce à l'invention de réaliser un insert à base de matière plastique, de préférence renforcée de fibres de verre, qui présente une rigidité similaire à celle d'un insert plat métallique, mais un poids inférieur à 30-35 % à celui de l'insert plat métallique.

L'accrochage mécanique entre l'insert selon l'invention et la matière du joint est satisfaisant et l'insert selon l'invention coûte à peu près le même prix qu'un insert métallique en métal non spécial.

Le fait de positionner la base en dehors du joint permet d'une manière surprenante d'améliorer la cohésion de l'ensemble joint/insert lors de l'application d'efforts ; selon les inventeurs, si la base était en contact avec le joint, alors lors des efforts, les déformations de la base engendreraient des contraintes néfastes dans le joint à l'interface base/joint.

Les détails et caractéristiques avantageuses de l'invention ressortent des exemples non limitatifs suivants, illustrés à l'aide des figures ci-jointes :
- la figure 1 illustre une vue partielle en coupe transversale d'un vitrage selon l'invention muni d'un joint positionné à la périphérie de l'élément vitré et incorporant un premier type d'insert selon l'invention ;
- La figure 2 illustre une vue en perspective de l'insert visible en figure 1;
- La figure 3 illustre une vue en coupe transversale de l'insert de la figure 1;
- La figure 4 illustre une vue en perspective d'un second type d'insert selon l'invention ;
- La figure 5 illustre une vue en coupe transversale de l'insert de la figure 4;
- La figure 6 illustre une vue en perspective d'un troisième type d'insert selon l'invention ;
- La figure 7 illustre une vue en coupe transversale d'un insert selon l'invention intégrant une première solution d'éclairage ;
- La figure 8 illustre une vue en coupe transversale d'un insert selon l'invention intégrant une seconde solution d'éclairage ;
- La figure 9 illustre une vue en coupe transversale d'un insert selon l'invention intégrant une troisième solution d'éclairage ; et
- La figure 10 illustre une vue en coupe transversale d'un insert selon l'invention intégrant une quatrième solution d'éclairage.

Dans ces figures, les proportions entre les dimensions et épaisseurs des différents éléments sont respectées et les éléments en arrière plan ne sont pas toujours représentés afin de faciliter leur lecture et la compréhension des exemples.

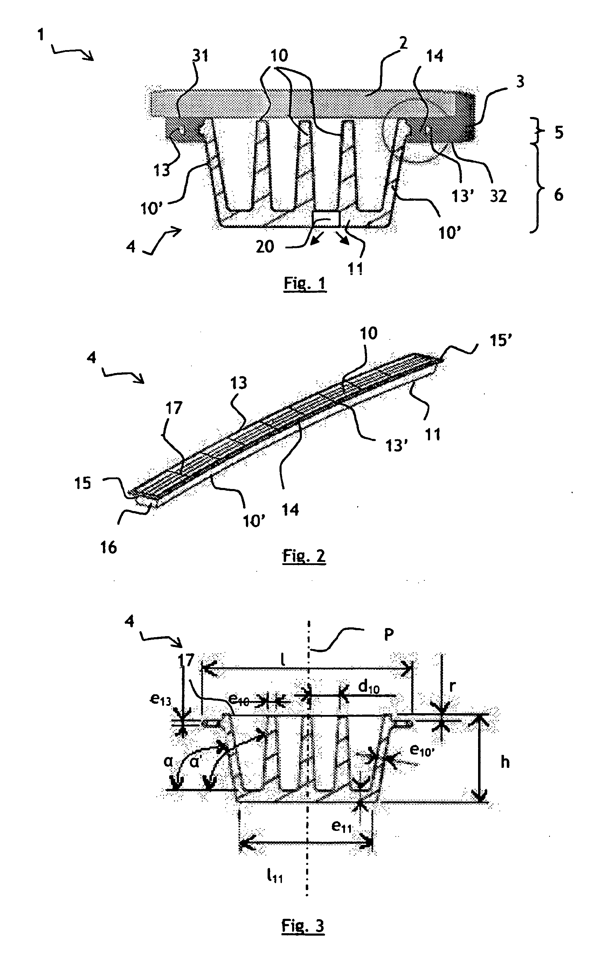

La présente invention se rapporte à un vitrage 1, illustré à titre d'exemple partiellement en figure 1, et qui est ici un vitrage de véhicule comme par exemple un vitrage de toit automobile.

Ce vitrage comporte au moins un élément vitré 2 présentant deux faces principales et un chant.

En figure 1, il s'agit d'un vitrage monolithique constitué d'une feuille de verre unique, mais il pourrait s'agir d'un vitrage multiple incorporant plusieurs feuilles de verre et/ou de matière plastique et en particulier un vitrage feuilleté comprenant deux feuilles de verre maintenues entre elles par une feuille intercalaire en matière plastique (par exemple en PVB).

Le vitrage présente une zone périphérique qui est munie d'au moins une portion de joint 3 qui comprend une matière plastique ; le joint est disposé contre le chant de l'élément vitré ainsi que contre le bord périphérique de la face intérieure de l'élément vitré, en adhérant à ce chant et à ce bord périphérique de la face intérieure de l'élément vitré.

Le vitrage 1 comporte au moins un insert 4 pour le renfort et/ou pour le prépositionnement et/ou pour le positionnement et/ou pour la fixation immobile ou mobile de l'élément vitré 2 par rapport à une baie qu'il doit fermer.

Le joint 3 présente une face interne 31 en contact avec la face principale intérieure et le chant de l'élément vitré 2 et une face externe 32 formant la peau externe du joint s'étendant vers l'intérieur du véhicule. Le vitrage 1, en tant que vitrage de toit est ainsi positionné dans le véhicule selon la même orientation verticale qu'en figure 1.

Le joint peut être en toute matière utilisée habituellement pour les vitrages de véhicule et notamment à base de polyuréthane.

L'insert 4 présente une portion intérieure 5 positionnée à l'intérieur du joint 3 et une portion extérieure 6 positionnée à l'extérieur du joint 3.

Selon l'invention, l'insert 4 présente en coupe transversale une forme de peigne comportant au moins trois dents 10, 10', et de préférence au maximum dix dents, s'étendant perpendiculairement à partir d'une base 11 ou avec un angle α mesuré à partir d'une base 11 qui est supérieur à 45 ° et inférieur à 90 °. La base 11 est l'élément qui relie les dents entre elles.

Selon l'invention, l'insert est en fait un insert partiel puisqu'une partie seulement de l'insert est positionnée dans le joint 3 (c'est la portion intérieure 5) et qu'une autre partie au moins de l'insert est positionnée en dehors du joint 3 (c'est la portion extérieure 6) ; ces deux parties sont venues de matières ; il n'est possible de les distinguer que sur le vitrage fini, lorsque le vitrage est muni du joint 3 qui incorpore partiellement l'insert 4.

L'insert selon l'invention comporte ainsi de trois à dix dents 10, 10' en nombre pair ou impair, les dents étant reliées entre elles par la base 11, unique.

La base peut être plate sur sa longueur si le vitrage est plat mais peut être aussi courbée sur sa longueur ; elle est toutefois sensiblement plate sur sa largeur.

Comme on peut le voir à titre d'exemple en figure 1, en coupe transversale du vitrage, la hauteur de la portion intérieure 5 de l'insert 4 est de préférence inférieure à la hauteur de sa portion extérieure 6 positionnée à l'extérieur dudit joint 3. La hauteur de la portion intérieure 5 peut représenter par exemple entre le tiers et le quart de la hauteur de la portion extérieure 6.

Il est toutefois possible que la hauteur de la portion intérieure 5 de l'insert 4 soit sensiblement égale à la hauteur de sa portion extérieure 6 positionnée à l'extérieur dudit joint 3, mais il est déconseillé que la hauteur de la portion intérieure 5 de l'insert 4 soit supérieure à la hauteur de sa portion extérieure 6 positionnée à l'extérieur du joint 3 car dans ce dernier cas, la quantité de matière formant le joint sera trop grande.

La base 11 est positionnée au delà de la face externe 32 de la portion du joint 3 dans laquelle la portion intérieure 5 de l'insert est positionnée. La base 11 appartient ainsi à la portion extérieure 6 de l'insert 4, celle qui est positionnée à l'extérieur du joint 3.

Pour gagner du poids, de préférence, l'insert 4 ne comporte pas de pièce à base de métal et comporte de la matière plastique éventuellement renforcée par exemple de fibres de verre. L'enseignement de la demande de brevet N° WO 03/070500 peut être suivi pour le choix de la matière.

Il est possible d'utiliser par exemple pour réaliser l'insert 4 une matière plastique chargée à 30 % en fibre de verre, comme par exemple du PBT GF30 présentant un module d'Young de 5 500 - 10 000 MPa et une résistance à la traction de 80 - 140 MPa.

Pour réaliser l'insert selon l'invention, il est également possible d'utiliser une structure à âme renforcée et recouverte d'une peau, comme par exemple une structure en nid d'abeille recouverte d'une matière plastique.

Dans toutes les variantes illustrées, le vitrage 1 est muni d'un joint 3 qui ne déborde pas sur la face extérieur du vitrage, afin de permettre de réaliser un montage affleurant avec la carrosserie (montage « flush» en anglais). D'autres montages sont toutefois possibles.

Dans la variante préférée illustrée, en coupe transversale dudit insert 4, au moins une dent latérales 10' plus à l'extérieur, à gauche ou à droite, et de préférence les deux dents latérales 10' les plus à l'extérieur à gauche et à droite, présente(nt), à leur extrémité qui n'est pas liée à la base mais qui est opposée à la base 11, une aile latérale 13, 13' s'étendant sensiblement parallèlement à ladite base 11. Chaque aile latérale 13, 13' s'étend sensiblement parallèlement à l'élément vitré dans le joint 3 et présente de préférence au moins un trou 14, et de préférence plusieurs trous, pour le passage de la matière plastique dudit joint 3, comme visible dans le cercle en figure 1. Ce passage permet de réaliser un maintien mécanique entre l'insert 4 et le joint 3.

Selon l'invention, le surmoulage du joint 3 est opéré en recouvrant partiellement (pas complètement) lesdites dents latérales 10' les plus à l'extérieur à gauche et à droite de la structure en peigne de la matière plastique constitutive du joint 3 : ce recouvrement s'étend sur toute la longueur des dents latérales 10' les plus à l'extérieur à gauche et à droite, sur environ un tiers à un quart de leur hauteur.

Le surmoulage du joint 3 est opéré sans recouvrir du tout les autres dents 10 et la base 11 de la matière plastique constitutive dudit joint 3. Ici ce surmoulage recouvre lesdites ailes latérales 13, 13' de la matière plastique constitutive dudit joint 3 sur toute la longueur des ailes latérales.

L'insert 4 est, de préférence fermé à ses extrémités longitudinales.

Ainsi, comme l'insert 4 est positionné contre la face adjacente de l'élément vitré lors de l'injection de la matière plastique, la matière plastique formant le joint ne pénètre pas à l'intérieur de la structure en peigne, le surmoulage ne pénètre pas entre les dents du peigne et ne forme pas de poche de matière plastique de joint entre l'insert et l'élément vitré.

Cela permet d'une part d'économiser de la matière plastique de joint et d'autre part d'éviter toute réaction ultérieure de cette matière contre les dents et qui pourrait être néfaste pour la tenue mécanique générale.

L'insert illustré aux figures 1 à 3 comporte cinq dents 10, 10' reliées entre elles par la base 11. Il présente une symétrie selon un plan longitudinal central P : ce plan passe ainsi par le milieu de la dent centrale du peigne, qui est orientée perpendiculairement à la base 11 (son axe central est perpendiculaire au plan moyen de la base 11).

Seules les deux dernières dents du peigne, les dents latérales 10' les plus à l'extérieur à gauche et à droite, ne sont pas orientées perpendiculaire à la base 11 : elles sont orientées chacune d'un angle α qui est supérieur à 45 ° tout en étant inférieur à 90 ° . Ici, l'angle a est de l'ordre de 80 ° . Ceci permet de faciliter le démoulage de l'insert s'il est fabriqué par moulage et le démoulage du vitrage en lui-même-lors de la fabrication du joint 3.

Partant du plan P vers les côtés latéraux droit et gauche sur la figure 1, les deux dents intermédiaires situées à droite et à gauche de plan P entre la dent centrale et les dents latérales les plus à l'extérieur sont également orientées chacune perpendiculairement à la base 11 : 1 leur axe central respectif est perpendiculaire au plan moyen de la base 11.

Ces trois dents (la dent centrale et chaque dent contigüe à cette dent centrale) sont coniques et sont réalisées en s'amincissant à partir de la base 11. L'angle a' entre les parois d'une dent 10 et la base est de l'ordre de 93 °. Ces trois dents 10 présentent à leur liaison avec la base 11 une épaisseur identique à l'épaisseur e₁₁ de la base 11 qui est de l'ordre de 3 mm. L'épaisseur e₁₀ de ces trois dents à leur extrémité la plus proche de l'élément vitré est de l'ordre de 2 mm et la distance d₁₀ entre la dent centrale et chaque dent contigüe à droite ou à gauche au plus près de l'élément vitré est de l'ordre de 6,5 mm.

Dans la variante préférée illustrée, en coupe transversale dudit insert 4, toutes les dents 10 autres que les dents latérales 10' les plus à l'extérieur à gauche et à droite, s'étende(nt) perpendiculairement à partir de la base 11 et présentent en coupe transversale une forme conique plus large en direction de ladite base 11.

Par ailleurs, dans la variante préférée illustrée, l'insert 4 est fermé à au moins une extrémité longitudinale, et de préférence à ses deux extrémités longitudinales, par une paroi de fond 16 (visible en figure 2) qui est venue de matière avec la base 11.

Les dents latérales 10' les plus à l'extérieur à gauche et à droite du peigne présentent chacune une épaisseur constante e₁₀, de l'ordre de 2 mm.

Dans ce premier type d'insert, l'épaisseur e₁₃ des ailes latérales 13, 13' est, de préférence, légèrement inférieure à l'épaisseur e₁₀, e₁₀, des dents 10, 10', et est de l'ordre de 1,5 mm.

Les ailes latérales 13, 13' ne sont pas situées tout au bout de l'extrémité la plus proche de l'élément vitré des dents latérales 10' les plus à l'extérieur à gauche et à droite, mais légèrement en retrait r par rapport à l'extrémité de ces dents latérales 10' qui est la plus proche de l'élément vitré. Le retrait r est de l'ordre de 1,5 mm.

L'insert 4 présente, en coupe transversale, comme visible sur la figure 3 une hauteur h hors-tout comprise entre 12 et 28 mm, ici de l'ordre de 20 mm, et une largeur l hors-tout comprise entre 20 et 70 mm, ici de l'ordre de 50 mm. La longueur de l'insert est fonction de la longueur du bord du vitrage ; elle peut être, par exemple de 80 cm pour un vitrage présentant une longueur d'environ 90 cm.

La largeur l₁₁ de la base 11 est de l'ordre de 32 mm.

En partant de la surface de l'élément vitré, la hauteur totale des dents latérales 10' les plus à l'extérieur à gauche et à droite est légèrement supérieure à la hauteur totale des autres dents 10 (la différence de hauteur est de l'ordre de 0,5 mm), afin que les dents latérales 10' les plus à l'extérieur à gauche et à droite repose bien contre la surface intérieure de l'élément vitré et que la matière du joint ne pénètre pas entre les dents et afin que les autres dents 10 ne soient pas en contact avec la surface de l'élément vitré.

Dans le premier type d'insert, en coupe longitudinale de l'insert 4, au moins une dent 10, et de préférence toutes les dents 10, présente(nt), à leur extrémité opposée à ladite base 11, une aile longitudinale 15, 15' s'étendant sensiblement parallèlement à ladite base 11.

Les ailes longitudinales 15, 15' ne sont pas situées tout au bout de l'extrémité la plus proche de l'élément vitré des dents 10, 10', mais légèrement en retrait r par rapport à l'extrémité libre de ces dents 10, 10'. Le retrait r est aussi de l'ordre de 1,5 mm.

Ici, les ailes longitudinales 15, 15' sont ainsi dans la continuité longitudinale des ailes latérales 13, 13' et la surface totale de toutes les ailes forment une couronne pour l'insert.

De préférence, chaque aile longitudinale 15, 15' présente aussi au moins un trou 14, et de référence plusieurs trous, pour le passage de la matière plastique dudit joint 3. Le surmoulage du joint 3 recouvre ainsi lesdites ailes longitudinale 15, 15' de la matière plastique constitutive dudit joint 3 sur toute la largeur de l'insert.

L'insert comporte deux trous de localisation, situés aux extrémités de l'insert (dans les ailes aile longitudinale 15, 15'). Ces trous de localisation reçoivent un axe (fixé dans le moule) et permettant de réaliser le brochage de la pièce et sa focalisation lors de l'injection de la matière constitutive du joint. Ces trous de localisation ne sont pas remplis de matière constitutive du joint lors du moulage du joint.

La détermination du nombre de trous 14 et du diamètre des trous 14 est un compromis entre la faisabilité technique et l'encombrement disponible sur la périphérie de l'insert (la largeur des ailes latérales et longitudinales est ici de 5 mm).

Il est possible de déterminer la surface totale des trous en fonction de l'effort maximal que l'ensemble du vitrage fixé par l'intermédiaire de l'insert ou des inserts doit être capable de supporter, en fonction de la contrainte en cisaillement de la matière du joint et en fonction des dimensions de l'insert.

Cette surface totale peut ensuite être répartie à la périphérie de l'insert pour réaliser une distribution relativement uniforme des trous. Les trous sont de préférence tous ronds et présentent de préférence tous le même diamètre, mais il est possible de réaliser des trous plus larges que d'autres ou de forme différente.

La contrainte à la rupture du matériau choisi étant de 6,2 MPa, la section correspondante (pour le trou théorique) est de 7,2 mm², soit un diamètre de 3 mm ±0,5 mm.

Une valeur supérieure de diamètre entraîne une diminution du passage matière lors de l'injection de l'insert plastique et une diminution des performances mécaniques ; Une valeur inférieure ne permet pas de satisfaire aux exigences de résistance à la rupture.

Dans la variante préférée illustrée, l'insert 4 présente au moins une cloison transversales 17 et de préférence plusieurs cloisons transversales 17, chacune d'une épaisseur d'environ 2 mm et avec une distance entre deux cloisons successives selon la longueur de l'insert qui est de préférence comprise entre 50 et 80 mm.

Il a été déterminé en pratique, que la distance entre deux cloisons transversales 17 est de 68 mm pour cet insert pour une déformation théorique de l'insert de 0,06 m et en prenant en considération la valeur de la flexion qui est donnée par Y1=(Kg P L³) / (E (le³/12)), où :
L : Longueur de l'insert : 794 mm
e : épaisseur de la paroi de l'insert
l : largeur de l'insert
P : charge équivalente sur l'insert.
E : Le module d'Young de la matière sélectionnée est de 9500 MPa.
Kg = coefficient pour un chargement uniforme avec des appuis simples (Kg = 5/384).

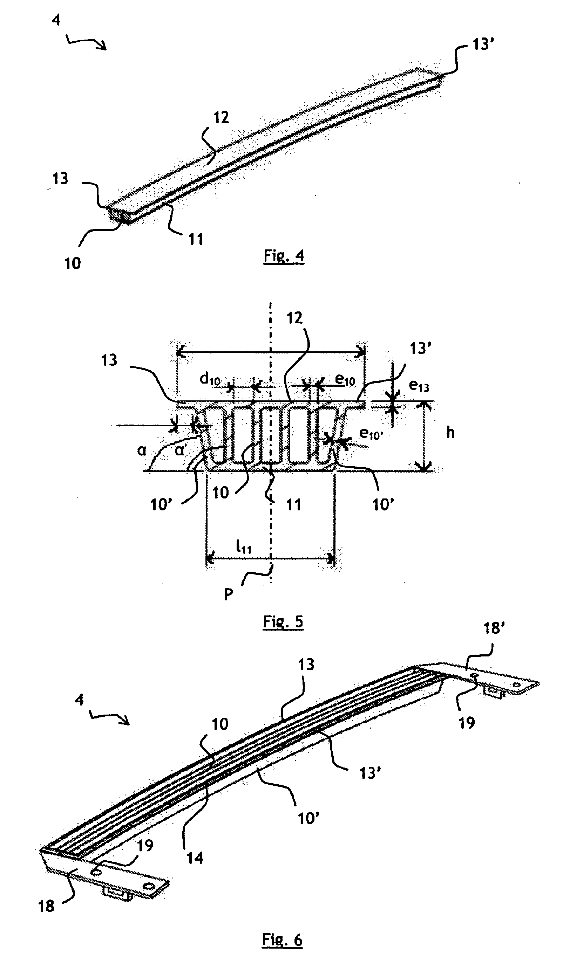

Dans le second type d'insert, illustré aux figures 4 et 5, en coupe transversale de l'insert 4 au moins deux dents 10 (et en fait ici toutes les dents) sont reliées entre elles à leur extrémité opposée à ladite base 11 par une plaque 12. Cette plaque 12 est orientée sensiblement parallèlement à la base 11.

Cet insert est destiné à être positionné comme en figure 1, avec la base 11 appartenant à la portion extérieure 6 ; la plaque 12 appartient ainsi à la portion intérieure 5 et se trouve en vis-à-vis de la face intérieure de l'élément vitré. La plaque 12 peut être en contact avec la face intérieure de l'élément vitré ou positionné à une distance de 1 à 5 mm de la face intérieure de l'élément vitré, l'espace entre la plaque 12 et la face intérieure de l'élément vitré étant alors, de préférence, remplie de matière constitutive du joint.

Selon l'invention, le surmoulage du joint 3 est opéré en recouvrant partiellement (pas complètement) lesdites dents latérales 10' les plus à l'extérieur à gauche et à droite de la structure en peigne de la matière plastique constitutive du joint 3 : ce recouvrement s'étend sur toute la longueur des dents latérales 10' les plus à l'extérieur à gauche et à droite, sur environ un tiers à un quart de leur hauteur.

Dans ce second type d'insert, il n'y a pas d'aile longitudinale, contrairement au premier type et les ailes latérales13, 13' prolongent ainsi la plaque 12 vers la gauche et vers la droite.

Ici, les ailes latérales 13, 13' sont situées tout au bout de l'extrémité la plus proche de L'élément vitré des dents latérales 10' les plus à l'extérieur à gauche et à droite ; il n'y a donc pas de retrait.

Cet insert 4 est, de préférence, fermé, par exemple à l'aide d'un bouchon rapporté (non illustré), à au moins une extrémité longitudinale et de préférence à ses deux extrémités longitudinales.

Ce type d'insert peut être fabriqué par moulage par injection mais est de préférence fabriqué par extrusion directe au travers d'une filière d'extrusion et coûte alors moins cher à fabriquer que par moulage par injection.

Pour ce second type, l'insert 4 présente, comme pour le premier type d'insert, en coupe transversale, comme visible sur la figure 5 une hauteur h hors-tout comprise entre 12 et 28 mm, ici de l'ordre de 20 mm, et une largeur l hors-tout comprise entre 20 et 70 mm, ici de l'ordre de 50 mm.

Toutefois, ici, à la différence du premier type d'insert, le peigne comporte six dents 10, 10' reliées entre elles par la base 11 : deux dents 10 centrales, deux dents 10 contigües aux dents centrales et deux dents latérales 10' les plus à l'extérieur à gauche et à droite du peigne.

L'insert présente une symétrie selon un plan longitudinal central P : ce plan passe ainsi par le milieu entre les deux dents centrales du peigne, qui sont orientées perpendiculairement à la base 11.

La largeur l₁₁ de la base 11 est aussi de l'ordre de 32 mm.

Toutefois, comme pour le premier type d'insert, seules les deux dernières dents du peigne, les dents latérales 10' les plus à l'extérieure à gauche et à droite du peigne, ne sont pas orientées perpendiculaire à la base 11 : elles sont orientées chacune d'un angle α qui est supérieur à 45 ° tout en étant inférieur à 90 °. Ici, l'angle a est de l'ordre de 80 ° ; toutes les autres dents 10 sont orientées perpendiculairement à la base 11 et par voie de conséquence perpendiculairement à la plaque 12.

Partant du plan P vers les côtés latéraux droit et gauche sur la figure 5, les deux dents intermédiaires situées entre les dents centrales et les dents d'extrémité sont également orientées chacune perpendiculairement à la base 11 et par voie de conséquence perpendiculairement à la plaque 12.

L'épaisseur e_{10'} des dents latérales 10' les plus à l'extérieur à gauche et à droite est constante et est de l'ordre de 1,8 mm et l'épaisseur e₁₀ des quatre autres dents 10 est constante et est de l'ordre de 2 mm et la distance d₁₀ latérale entre deux dents 10 contigües à l'extrémité des dents qui est la plus proche de l'élément vitré (c'est-à-dire à l'extrémité de raccordement avec la plaque 12) est de l'ordre de 5 mm.

Dans ce second type d'insert, l'épaisseur e₁₃ des ailes latérales 13, 13' est sensiblement identique à l'épaisseur e₁₀ des dents 10 et à l'épaisseur e₁₁ de la base 11.

Dans le troisième type d'insert, illustré en figure 6, l'insert 4 comporte à une extrémité longitudinale et de préférence à ses deux extrémités longitudinales, au moins une patte transversale 18, 18'. Chaque patte transversale 18, 18' s'étend ainsi sensiblement perpendiculairement à la longueur de l'insert, dans la continuité des ailes longitudinales ; ces pattes sont aussi, de préférence, venues de matière avec les dents 10, 10' et la base 11.

Chaque patte transversale 18, 18' est positionnée dans la portion extérieure 6 de l'insert 4 et comporte des moyens de fixation, comme par exemple au moins un trou taraudé 19. Ce trou permet de visser un élément supplémentaire pour permettre le prépositionnement et/ou le positionnement et/ou la fixation immobile ou mobile de l'élément vitré 2 par rapport la baie qu'il doit fermer.

Ce type d'insert ne peut pas être obtenu par extrusion directe et est ainsi, de préférence, fabriqué par moulage par injection.

Dans ce troisième type d'insert, tel qu'illustré en figure 6, l'insert s'étend sur trois bords de l'élément vitré, mais la base 11 ne s'étend que sur un seul bord.

Il est possible d'utiliser la structure du premier type d'insert (figure 1) ou du second type d'insert (figure 4) pour réaliser un insert dont la base s'étend sur plusieurs bords de l'élément vitré, voir sur tous les bords de l'élément vitré et forme dans ce dernier cas une structure périphérique qui suit la périphérie de l'élément vitré.

Selon une variante avantageuse, pour fabriquer le vitrage 1 selon l'invention l'insert 4 est moulé dans un moule, puis le joint 3 est moulé dans le même moule.

Toutefois, il est également possible d'utiliser un insert 4 préfabriqué, par exemple par moulage dans un autre moule ou par extrusion à travers une filière. Pour que l'insert 4 conserve sa position vis-à-vis de l'élément vitré 2 lors du moulage du joint 3 il est possible de le fixer avant le moulage du joint 3 par ruban adhésif contre la surface de l'élément vitré. Cet adhésif peut alors améliorer l'étanchéité entre les dents latérales 10' les plus à l'extérieur et la surface de l'élément vitré pour empêcher la matière du joint de pénétrer entre les dents 10.

Il est en outre possible que l'insert 4 comporte lui-même un élément de renfort, comme par exemple un élément de renfort métallique plat, notamment pour renforcer la base 11.

L'insert selon l'invention, grâce notamment sa résistance mécanique générale, peut servir de support pour un éclairage comportant au moins une source lumineuse.

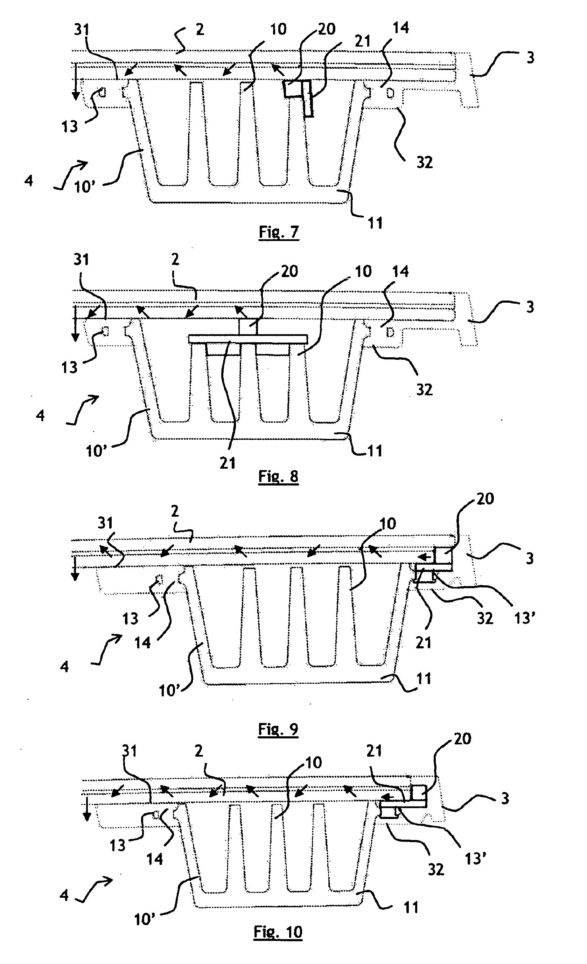

Les figures 7 à 10 illustrent ainsi quatre variantes de réalisation d'un tel support en utilisant l'élément vitré comme guide de lumière entre la source lumineuse et une zone d'éclairage spécifique (éclairage indirect).

Pour toutes ces variantes, l'élément vitré 2 est un vitrage feuilletté constitué de deux feuilles de verre séparées par une feuille de matière plastique intercalaire et la source lumineuse comporte une pluralité de diode électroluminescente DEL 20 réparties le long de l'insert et disposés sur un support 21 qui est attaché à l'insert 4 (une seule diode électroluminescente DEL 20 est illustrée sur chaque figure). Les flèches droites illustrent la diffusion de la lumière issue de la DEL dans l'élément vitré et au travers de ce dernier vers l'intérieur du véhicule.

Dans les variantes des figures 7 et 8, le support 21 est fixé sur une ou plusieurs dents 10, autres que les dents latérales 10' les plus à l'extérieur à gauche et à droite ; la source lumineuse est ainsi disposée à l'abri, entre les dents 10, 10' du peigne.

Dans la variante de la figure 7, le support 21 est disposé sur une dent 10 qui est plus courte que les autres dents 10 alors que dans la variante de la figure 8, toutes les dents 10 sont plus courtes que les dents latérales 10' les plus à l'extérieur à gauche et à droite et toutes les dents 10 permettent le maintient du support 21 à l'intérieur de la structure en peigne.

Pour alimenter la source lumineuse, il suffit de prévoir que l'alimentation électrique traverse le joint 3 puis l'insert 4, par exemple à une de ses extrémités longitudinales.

Dans les variantes des figures 9 et 10, le support 21 est fixé sur une aile latérale 13' de l'insert et se trouve disposé entre cette aile latérale 13' et la face intérieure de l'élément vitré et la DEL éclaire dans le chant de l'élément vitré 2.

Dans la variante de la figure 9, la DEL 20 est protégée de l'extérieur du véhicule par la feuille de verre la plus à l'extérieure de l'élément vitré et est protégé latéralement par le joint 3 alors que dans la variante de la figure 10 la DEL 20 est protégée de l'extérieur et latéralement par le joint 3.

Dans ces deux dernières variantes, pour alimenter la source lumineuse, il suffit de prévoir que l'alimentation électrique traverse le joint 3.

Il est également possible, en utilisant le second type d'insert (figure 4) de disposer les DEL dans la plaque 12 pour réaliser un éclairage indirect.

En figure 1, une DEL 20 d'une source lumineuse a aussi été représentée. Cette DEL est insérée dans la base 11 de l'insert et éclaire directement l'intérieur de l'habitacle du véhicule. Plusieurs DEL sont de préférence prévues le long de l'insert.

Il est également possible, en utilisant le second type d'insert (figure 4) de disposer les DEL dans la base 11 pour réaliser un éclairage direct.

L'éclairage réalisé grâce à l'invention peut être séparé en plusieurs zones distinctes, avec des moyens de commande (interrupteurs) différents pour chaque zone et éventuellement des moyens de réglage de l'intensité. Tous ces moyens sont, de préférence supportés, voire protégés, par l'insert selon l'invention.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage (1), notamment vitrage automobile, comportant au moins un élément vitré (2) présentant une zone périphérique munie d'au moins une portion de joint (3) comprenant une matière plastique, ledit vitrage comportant au moins un insert (4), cet insert présentant une portion intérieure (5) positionnée à l'intérieur dudit joint (3) et une portion extérieure (6) positionnée à l'extérieur dudit joint (3), ***caractérisé en ce que*** ledit insert (4) présente en coupe transversale une forme de peigne comportant au moins trois dents (10, 10'), et de préférence au maximum dix dents, chaque dent s'étendant perpendiculairement à partir d'une base (11) ou avec un angle α supérieur à 45 ° et inférieur à 90 ° à partir d'une base (11) et **en ce que** ladite base (11) est positionnée à l'extérieur dudit joint (3).

2. Vitrage (1) selon la revendication 1, ***caractérisé en ce que*** ledit insert (4) présente au moins une cloison transversale (17) et de préférence plusieurs cloisons transversales (17) avec une distance entre deux cloisons successives selon la longueur de l'insert qui est de préférence comprise entre 50 et 80 mm.

3. Vitrage (1) selon la revendication 1 ou 2, ***caractérisé en ce que*** au moins une dent centrale (10), voire plusieurs dents centrales (10), s'étende(nt) perpendiculairement à partir de la base (11) et présente(nt) en coupe transversale une forme conique plus large en direction de ladite base (11).

4. Vitrage (1) selon l'une quelconque des revendications 1 à 3, ***caractérisé en ce que*** l'épaisseur e₁₀, e_{10'} des dents (10, 10') et l'épaisseur e₁₁ de la base (11) sont comprises entre 1,1 et 4,5 mm, lesdites dents (10, 10') présentant, de préférence, une épaisseur e₁₀, e₁₀, sensiblement identique à l'épaisseur e₁₁ de la base (11) à leur extrémité de raccordement avec ladite base (11).

5. Vitrage (1) selon l'une quelconque des revendications 1 à 4, ***caractérisé en ce que*** ladite base (11) est positionnée au delà d'une face externe (32) de la portion du joint dans laquelle la portion intérieure (5) de l'insert est positionnée.

6. Vitrage (1) selon l'une quelconque des revendications 1 à 5, ***caractérisé en ce que*** ledit insert (4) est fermé à au moins une extrémité longitudinale et de préférence à ses deux extrémités longitudinales.

7. Vitrage (1) selon l'une quelconque des revendications 1 à 6, ***caractérisé en ce que*** en coupe transversale dudit insert (4) au moins deux dents (10, 10') sont reliées entre elles à leurs extrémités opposées à ladite base (11) par une plaque (12).

8. Vitrage (1) selon l'une quelconque des revendications 1 à 7, ***caractérisé en ce que*** en coupe transversale dudit insert (4), au moins une dent latérales (10'), et de préférence les deux dents latérales (10'), présente(nt), à leur(s) extrémité(s) opposée(s) à ladite base (11), une aile latérale (13, 13') s'étendant sensiblement parallèlement à ladite base (11), ladite aile latérale (13, 13') présentant de préférence au moins un trou (14) pour le passage de la matière plastique dudit joint (3) dont le diamètre est de préférence de 3 mm ± 0,5 mm.

9. Vitrage (1) selon la revendication 8, ***caractérisé en ce que*** ladite aile latérale (13, 13') ou chaque aile latérale (13, 13') s'étend sensiblement sur toute la longueur dudit insert (4).

10. Vitrage (1) selon l'une quelconque des revendications 1 à 9, ***caractérisé en ce que*** en coupe longitudinale dudit insert (4), au moins une dent (10, 10'), et de préférence toutes les dents (10, 10'), présente(nt), à leur(s) extrémité(s) opposée(s) à ladite base (11), une aile longitudinale (15, 15') s'étendant sensiblement parallèlement à ladite base (11), ladite aile longitudinale (15, 15') présentant de préférence au moins un trou (14) pour le passage de la matière plastique dudit joint (3) dont le diamètre est de préférence de 3 mm ± 0,5 mm.

11. Vitrage (1) selon la revendication 10, ***caractérisé en ce que*** ladite aile longitudinale (15, 15') ou chaque aile longitudinale (15, 15') s'étend sensiblement sur toute la largeur dudit insert (4).

12. Vitrage (1) selon l'une quelconque des revendications 1 à 11, ***caractérisé en ce que*** ledit insert (4) présente, en coupe transversale, une hauteur hors-tout comprise entre 12 et 28 mm, la hauteur de la portion intérieure (5) de l'insert (4) étant de préférence inférieure à la hauteur de sa portion extérieure (6) positionnée à l'extérieur dudit joint (3).

13. Vitrage (1) selon l'une quelconque des revendications 1 à 12, ***caractérisé en ce que*** ladite base (11) s'étend sur plusieurs bords du vitrage et en particulier sur tous les bords de l'élément vitré (2).

14. Vitrage (1) selon l'une quelconque des revendications 1 à 13, ***caractérisé en ce que*** ledit insert (4) comporte à une extrémité longitudinale et de préférence à ses deux extrémités longitudinales, au moins une patte transversale (18, 18') positionnée à l'extérieur dudit joint (3) et comportant des moyens de fixation, comme par exemple un trou maraudé (19).

15. Vitrage (1) selon l'une quelconque des revendications 1 à 14, ***caractérisé en ce que*** ledit insert (4) comporte de la matière plastique éventuellement renforcée par des charges, comme par exemple des fibres de verre.

16. Vitrage (1) selon l'une quelconque des revendications 1 à 15, ***caractérisé en ce que*** ledit insert (4) réalise un support pour un éclairage comportant au moins une source lumineuse, comme par exemple une DEL (20), ladite source lumineuse étant, de préférence, disposée entre les dents (10, 10') du peigne ou sur la base (11).

17. Procédé de fabrication d'un vitrage (1) selon l'une quelconque des revendications 1 à 16, dans lequel au moins une portion de joint (3) comprenant une matière plastique est surmoulée sur une zone périphérique d'un vitrage (1), notamment un vitrage automobile, comportant au moins un élément vitré (2), ladite portion de joint (3) comportant au moins un insert (4), cet insert présentant une portion intérieure (5) positionnée à l'intérieur dudit joint (3) et une portion extérieure (6) positionnée à l'extérieur dudit joint (3) ledit procédé étant **caractérisé en ce que** ledit insert (4) présente en coupe transversale une forme de peigne comportant au moins trois dents (10, 10'), et de préférence au maximum dix dents, chaque dent s'étendent perpendiculairement à partir d'une base (11) ou avec un angle α supérieur à 45° et inférieur à 90° à partir d'une base (11), ladite base (11) étant positionnée à l'extérieur dudit joint (3).

18. Procédé de fabrication d'un vitrage (1) selon la revendication 17, ***caractérisé en ce que*** le surmoulage est opéré sans recouvrir complètement de la matière plastique constitutive dudit joint (3) les dents latérales (10') et sans recouvrir du tout les autres dents et ladite base (11) de la matière plastique constitutive dudit joint (3) et de préférence en recouvrant au moins partiellement au moins une aile latérale (13, 13').

19. Procédé de fabrication d'un vitrage (1) selon la revendication 17 ou 18, ***caractérisé en ce que*** l'insert (4) est moulé dans un moule, puis le joint (3) est moulé dans le même moule.

## Patentansprüche

1. Glastafel (1), insbesondere Autoglastafel, umfassend mindestens ein Glaselement (2), das einen Umfangsbereich aufweist, der mit mindestens einem Abschnitt einer Dichtung (3) versehen ist, der ein Kunststoffmaterial umfasst, wobei die Glastafel mindestens einen Einsatz (4) umfasst, wobei dieser Einsatz einen Innenabschnitt (5), der innerhalb der Dichtung (3) angeordnet ist, und einen Außenabschnitt (6), der außerhalb der Dichtung (3) angeordnet ist, aufweist, **dadurch gekennzeichnet, dass** der Einsatz (4) im Querschnitt eine Kammform aufweist, die mindestens drei Zähne (10, 10') und vorzugsweise maximal zehn Zähne umfasst, wobei sich jeder Zahn ausgehend von einer Basis (11) senkrecht oder in einem Winkel α von mehr als 45° und weniger als 90° ausgehend von einer Basis (11) erstreckt, und dadurch, dass die Basis (11) außerhalb der Dichtung (3) angeordnet ist.

2. Glastafel (1) nach Anspruch 1, **dadurch gekennzeichnet, dass** der Einsatz (4) mindestens eine Quertrennwand (17) und vorzugsweise mehrere Quertrennwände (17) mit einem Abstand zwischen zwei aufeinander folgenden Trennwänden aufweist, der der Länge des Einsatzes entspricht, die vorzugsweise zwischen 50 und 80 mm liegt.

3. Glastafel (1) nach Anspruch 1 oder 2, **dadurch gekennzeichnet, dass** sich mindestens ein mittiger Zahn (10), sogar mehrere mittige Zähne (10), ausgehend von der Basis (11) senkrecht erstreckt/erstrecken, und im Querschnitt eine in Richtung der Basis (11) breitere, konische Form aufweist/aufweisen.

4. Glastafel (1) nach einem der Ansprüche 1 bis 3, **dadurch gekennzeichnet, dass** die Dicke e₁₀, e₁₀, der Zähne (10, 10') und die Dicke e₁₁ der Basis (11) zwischen 1,1 und 4,5 mm liegt, wobei die Zähne (10, 10') vorzugsweise eine Dicke e₁₀, e_{10'} aufweisen, die im Wesentlichen identisch mit der Dicke e₁₁ der Basis (11) an ihrem Verbindungsende mit der Basis (11) ist.

5. Glastafel (1) nach einem der Ansprüche 1 bis 4, **dadurch gekennzeichnet, dass** die Basis (11) jenseits einer Außenfläche (32) des Dichtungsabschnitts angeordnet ist, in dem der Innenabschnitt (5) des Einsatzes angeordnet ist.

6. Glastafel (1) nach einem der Ansprüche 1 bis 5, **dadurch gekennzeichnet, dass** der Einsatz (4) an mindestens einem Längsende und vorzugsweise an seinen beiden Längsenden geschlossen ist.

7. Glastafel (1) nach einem der Ansprüche 1 bis 6, **dadurch gekennzeichnet, dass** im Querschnitt des Einsatzes (4) mindestens zwei Zähne (10, 10') an ihren der Basis (11) gegenüberliegenden Enden durch eine Platte (12) miteinander verbunden sind.

8. Glastafel (1) nach einem der Ansprüche 1 bis 7, **dadurch gekennzeichnet, dass** im Querschnitt des Einsatzes (4) mindestens ein Seitenzahn (10') und vorzugsweise die beiden Seitenzähne (10') an ihrem/ihren der Basis (11) gegenüberliegenden Ende(n) einen Seitenflügel (13, 13') aufweist/aufweisen, der sich im Wesentlichen parallel zu der Basis (11) erstreckt, wobei der Seitenflügel (13, 13') vorzugsweise mindestens eine Öffnung (14) für den Durchlass des Kunststoffmaterials der Dichtung (3) aufweist, deren Durchmesser vorzugsweise 3 mm ± 0,5 mm beträgt.

9. Glastafel (1) nach Anspruch 8, **dadurch gekennzeichnet, dass** der Seitenflügel (13, 13') oder jeder Seitenflügel (13, 13') sich im Wesentlichen durch die gesamte Länge des Einsatzes (4) erstreckt.

10. Glastafel (1) nach einem der Ansprüche 1 bis 9, **dadurch gekennzeichnet, dass** im Längsschnitt des Einsatzes (4) mindestens ein Zahn (10, 10') und vorzugsweise alle Zähne (10, 10') an ihrem/ihren der Basis (11) gegenüberliegenden Ende(n) einen Längsflügel (15, 15') aufweist/aufweisen, der sich im Wesentlichen parallel zu der Basis (11) erstreckt, wobei der Längsflügel (15, 15') vorzugsweise mindestens eine Öffnung (14) für den Durchlass des Kunststoffmaterials der Dichtung (3) aufweist, deren Durchmesser vorzugsweise 3 mm ± 0,5 mm beträgt.

11. Glastafel (1) nach Anspruch 10, **dadurch gekennzeichnet, dass** der Längsflügel (15, 15') oder jeder Längsflügel (15, 15') sich im Wesentlichen über die gesamte Breite des Einsatzes (4) erstreckt.

12. Glastafel (1) nach einem der Ansprüche 1 bis 11, **dadurch gekennzeichnet, dass** der Einsatz (4) im Querschnitt insgesamt eine Höhe aufweist, die zwischen 12 und 28 mm enthalten ist, wobei die Höhe des Innenabschnitts (5) des Einsatzes (4) vorzugsweise geringer ist als die Höhe seines Außenabschnitts (6), der außerhalb der Dichtung (3) angeordnet ist.

13. Glastafel (1) nach einem der Ansprüche 1 bis 12, **dadurch gekennzeichnet, dass** die Basis (11) sich über mehrere Kanten der Glastafel erstreckt und insbesondere über alle Kanten des Glaselements (2).

14. Glastafel (1) nach einem der Ansprüche 1 bis 13, **dadurch gekennzeichnet, dass** der Einsatz (4) an einem Längsende und vorzugsweise an seinen beiden Längsenden mindestens eine Querlasche (18, 18') aufweist, die außerhalb der Dichtung (3) angeordnet ist und die Befestigungsmittel, wie zum Beispiel eine Gewindebohrung (19), umfasst.

15. Glastafel (1) nach einem der Ansprüche 1 bis 14, **dadurch gekennzeichnet, dass** der Einsatz (4) Kunststoffmaterial umfasst, das eventuell durch Füllstoffe, wie zum Beispiel Glasfasern, verstärkt ist.

16. Glastafel (1) nach einem der Ansprüche 1 bis 15, **dadurch gekennzeichnet, dass** der Einsatz (4) eine Halterung für eine Beleuchtungsanlage darstellt, die mindestens eine Lichtquelle, wie zum Beispiel eine LED (20), umfasst, wobei die Lichtquelle vorzugsweise zwischen den Zähnen (10, 10') des Kamms oder auf der Basis (11) angeordnet ist.

17. Verfahren zur Herstellung einer Glastafel (1) nach einem der Ansprüche 1 bis 16, wobei mindestens ein Abschnitt der Dichtung (3), der ein Kunststoffmaterial umfasst, auf einen Umfangsbereich einer Glastafel (1) aufgespritzt ist, insbesondere eine Autoglastafel, die mindestens ein Glaselement (2) umfasst, wobei der Abschnitt der Dichtung (3) mindestens einen Einsatz (4) umfasst, wobei der Einsatz einen Innenabschnitt (5), der innerhalb der Dichtung (3) angeordnet ist, und einen Außenabschnitt (6), der außerhalb der Dichtung (3) angeordnet ist, aufweist, wobei das Verfahren **dadurch gekennzeichnet ist, dass** der Einsatz (4) im Querschnitt eine Kammform aufweist, die mindestens drei Zähne (10, 10') und vorzugsweise maximal zehn Zähne umfasst, wobei jeder Zahn sich ausgehend von einer Basis (11) senkrecht oder in einem Winkel α von mehr als 45° und weniger als 90° ausgehend von einer Basis (11) erstreckt, wobei die Basis (11) außerhalb der Dichtung (3) angeordnet ist.

18. Verfahren zur Herstellung einer Glastafel (1) nach Anspruch 17, **dadurch gekennzeichnet, dass** das Aufspritzen vorgenommen wird, ohne die Seitenzähne (10') vollständig mit dem konstitutiven Kunststoffmaterial der Dichtung (3) zu bedecken, und ohne die anderen Zähne und die Basis (11) überhaupt mit dem konstitutiven Kunststoffmaterial der Dichtung (3) zu bedecken, und vorzugsweise, indem mindestens teilweise mindestens ein Seitenflügel (13, 13') bedeckt wird.

19. Verfahren zur Herstellung einer Glastafel (1) nach Anspruch 17 oder 18, **dadurch gekennzeichnet, dass** der Einsatz (4) in einer Form geformt wird und dass die Dichtung (3) in derselben Form geformt wird.

## Claims

1. A glazing unit (1), in particular automobile glazing unit, including at least one glazed element (2) having a peripheral area provided with at least one seal portion (3) comprising a plastic material, said glazing unit including at least one insert (4), this insert having an interior portion (5) positioned inside said seal (3) and an exterior portion (6) positioned outside said seal (3), ***characterized in that*** said insert (4) has in cross section a comb shape including at least three teeth (10, 10') and preferably at most ten teeth, each tooth extending away from a base (11) perpendicularly or at an angle a greater than 45° and less than 90° from a base (11) ***and in that*** said base (11) is positioned outside said seal (3).

2. The glazing unit (1) as claimed in claim 1, ***characterized in that*** said insert (4) has at least one transverse wall (17) and preferably a plurality of transverse walls (17) with a distance between two successive walls in the lengthwise direction of the insert that is preferably between 50 and 80 mm inclusive.

3. The glazing unit (1) as claimed in claim 1 or 2, ***characterized in that*** at least one central tooth (10), or even a plurality of central teeth (10), extend(s) perpendicularly from the base (11) and has/have in cross section a conical shape wider in the direction of said base (11).

4. The glazing unit (1) as claimed in any of claims 1 to 3, ***characterized in that*** the thickness e₁₀, e_{10'} of the teeth (10, 10') and the thickness e₁₁ of the base (11) are between 1.1 and 4.5 mm inclusive, said teeth (10, 10') preferably having a thickness e₁₀, e_{10'} substantially identical to the thickness e₁₁ of the base (11) at their end connected to said base (11).

5. The glazing unit (1) as claimed in any of claims 1 to 4, ***characterized in that*** said base (11) is positioned beyond an external face (32) of the portion of the seal in which the interior portion (5) of the insert is placed.

6. The glazing unit (1) as claimed in any of claims 1 to 5, ***characterized in that*** said insert (4) is closed at one longitudinal end at least and preferably at both its longitudinal ends.

7. The glazing unit (1) as claimed in any of claims 1 to 6, ***characterized in that*** in the cross section of said insert (4) at least two teeth (10, 10') are joined together at their ends opposite said base (11) by a plate (12).

8. The glazing unit (1) as claimed in any of claims 1 to 7, ***characterized in that*** in the cross section of said insert (4) at least one lateral tooth (10') and preferably both lateral teeth (10') has/have at their end opposite said base (11) a lateral flange (13, 13') extending substantially parallel to said base (11), said lateral flange (13, 13') preferably having at least one hole (14) for the plastic material of said seal (3) to pass through the diameter of which is preferably 3 mm ± 0.5 mm.

9. The glazing unit (1) as claimed in claim 8, ***characterized in that*** said or each lateral flange (13, 13') extends over substantially all the length of said insert (4).

10. The glazing unit (1) as claimed in any of claims 1 to 9, ***characterized in that*** in the longitudinal section of said insert (4), at least one tooth (10, 10'), and preferably all the teeth (10, 10'), has/have at their end opposite said base (11) a longitudinal flange (15, 15') extending substantially parallel to said base (11), said longitudinal flange (15, 15') preferably having at least one hole (14) for the plastic material of said seal (3) to pass through the diameter of which is preferably 3 mm ± 0.5 mm.

11. The glazing unit (1) as claimed in claim 10, ***characterized in that*** said or each longitudinal flange (15, 15') extends over substantially all the width of said insert (4).

12. The glazing unit (1) as claimed in any of claims 1 to 11, ***characterized in that*** said insert (4) has in cross section an overall height between 12 and 28 mm inclusive, the height of the interior portion (5) of the insert (4) preferably being less than the height of its exterior portion (6) positioned outside said seal (3).

13. The glazing unit (1) as claimed in any of claims 1 to 12, ***characterized in that*** said base (11) extends over a plurality of edges of the glazing unit and in particular over all the edges of the glazed element (2).

14. The glazing unit (1) as claimed in any of claims 1 to 13, ***characterized in that*** said insert (4) includes at one longitudinal end and preferably at both its longitudinal ends at least one transverse lug (18, 18') positioned outside said seal (3) and including fixing means such as a threaded hole (19).

15. The glazing unit (1) as claimed in any of claims 1 to 14, ***characterized in that*** said insert (4) includes plastic material where appropriate reinforced by charges such as glass fibers.

16. The glazing unit (1) as claimed in any of claims 1 to 15, ***characterized in that*** said insert (4) produces a support for a lighting system including at least one light source such as an LED (20), said light source preferably being disposed between the teeth (10, 10') of the comb or on the base (11).

17. A method of fabricating a glazing unit (1) as claimed in any of claims 1 to 16, wherein at least one seal portion (3) comprising a plastic material is overmolded onto a peripheral area of a glazing unit (1), notably an automobile glazing unit, including at least one glazed element (2), said seal portion (3) including at least one insert (4), this insert having an interior portion (5) positioned inside said seal (3) and an exterior portion (6) positioned outside said seal (3), said method being ***characterized in that*** said insert (4) has in cross section a comb shape including at least three teeth (10, 10') and preferably at most ten teeth, each tooth extending away from a base (11) perpendicularly or at an angle a greater than 45° and less than 90° from a base (11), said base (11) being positioned outside said seal (3).

18. The method as claimed in claim 17 of fabricating a glazing unit (1), ***characterized in that*** the overmolding is carried out without completely covering the lateral teeth (10') with the plastic material constituting said seal (3), without covering at all the other teeth and said base (11) with the plastic material constituting said seal (3) and preferably covers at least partially at least one lateral flange (13, 13').

19. The method as claimed in claim 17 or 18 of fabricating a glazing unit (1), ***characterized in that*** the insert (4) is molded in a mold and then the seal (3) is molded in the same mold.
